# EUROPÄISCHE PATENTANMELDUNG

(11) **EP 1 818 099 A1**
(43) Veröffentlichungstag der Anmeldung: **15.08.2007**
(21) Anmeldenummer: 06101572.3
(22) Anmeldetag: 13.02.2006
(51) Int. Cl.: B02C 2/10, A47J 42/02, A47J 42/10, A47J 42/06

(54) **Mahlwerk zur Zerkleinerung von körnigem Material, insbesondere im Nahrungsmittelbereich**

(71) Anmelder: Eldom Rothrist AG, 4852 Rothrist (CH)
(72) Erfinder: Etzinger, Christian, 6833 Klaus (AT); Ackermann, René, 4626 Niederbuchsiten (CH)
(74) Vertreter: Bremi, Tobias Hans

(57) **Zusammenfassung**

Beschrieben wird ein Mahlwerkzeug (1) zur Zerkleinerung von körnigem Material aus dem Lebensmittelbereich wie insbesondere bevorzugt Getreidekörner, Kaffeebohnen, Pfefferkörner, Salz oder Zucker, mit einem Mahlkegel (2) und einem diesen Mahlkegel (2) unter Bildung eines Mahlspaltes umgebenden feststehenden Mahlring (3), wobei der Mahlkegel (2) von einem Antrieb (5) angetrieben wird. Dabei ist erfindungsgemäss der Mahlkegel (2) über eine koaxiale, wenigstens im Lagerbereich zylindrische, in einem Lager (24) drehbar gelagerte Antriebswelle (22) mittelbar mit dem Antrieb (5) verbunden, und die Antriebswelle (22) und der Mahlkegel (2) sind einstückig ausgebildet.

## Beschreibung

### TECHNISCHES GEBIET

Die vorliegende Erfindung betrifft ein verbessertes Mahlwerkzeug zur Zerkleinerung von körnigem Material aus dem Lebensmittelbereich wie insbesondere bevorzugt Getreidekörner, Kaffeebohnen, Pfefferkörner, Salz oder Zucker, mit einem Mahl-Innenkörper respektive Mahlkegel und einem diesen Mahl-Innenkörper unter Bildung eines Mahlspaltes umgebenden feststehenden Mahlring, wobei normalerweise der Mahl-Innenkörper und der Mahlring an ihren gegenüberliegenden Mänteln im oberen Bereich jeweils grössere Fördertaschen bildende Fördernuten und im sich hieran anschliessenden unteren als Mahlkegel ausgestalteten Bereich jeweils Mahlzähne mit geringerer Zahnhöhe aufweisen.

### STAND DER TECHNIK

Zur Lebensmittelzubereitung sind Pfeffer-, Salz- und auch Getreidemühlen der genannten Art bekannt. Problematisch an derartigen Konstruktionen ist in der Regel die Tatsache, dass eine Vielzahl von unterschiedlichen Bauteilen erforderlich ist, um ein gesamtes Mahlwerkzeug zusammen zu bauen. Die Komplexität wird dadurch erhöht, dass einerseits so viele Bauteile wie möglich aus einem billigen Material wie beispielsweise aus gespritztem Kunststoff hergestellt sein sollten, und andererseits gewisse Bauteile, das heisst insbesondere jene, welche den eigentlichen Mahlvorgang durchführen, das heisst der Mahlkegel und der Mahlring, aus einem harten Material wie beispielsweise Metall oder Keramik (oder gegebenenfalls beschichtete Materialien) bestehen sollten. Zudem sollte ein derartiges Mahlwerk eine kompakte Bauweise haben und es sollte in seiner Aussenform möglichst unterschiedlichen Bedingungen angepasst werden können.

Die DE 195 14 794 betrifft ein solches Mahlwerkzeug der eingangs genannten Art, wobei ein möglichst geringer Verschleiss und eine ideale geometrische Ausgestaltung von Mahlkegel und Mahlring vorgeschlagen werden. Die eigentliche Bauweise des gesamten Aufbaus eines Mahlwerkes wird in dieser Schrift nicht im Detail beschrieben.

### DARSTELLUNG DER ERFINDUNG

Der Erfindung liegt demnach die Aufgabe zugrunde, ein verbessertes, konstruktiv vereinfachtes, und gleichzeitig sehr zuverlässiges Mahlwerk der eingangs genannten Art zur Verfügung zu stellen.

Konkret handelt es sich um eine Verbesserung eines Mahlwerkzeuges zur Zerkleinerung von körnigem Material aus dem Lebensmittelbereich wie insbesondere bevorzugt Getreidekörner, Kaffeebohnen, Pfefferkörner, Salz oder Zucker, welches einen Mahlkegel und einem diesen Mahlkegel unter Bildung eines Mahlspaltes umgebenden feststehenden Mahlring aufweist, wobei der Mahlkegel von einem Antrieb angetrieben wird.

Eine konstruktiv und hinsichtlich der Montage erhebliche Vereinfachung wird dadurch erreicht, dass der Mahlkegel über eine koaxiale, wenigstens im Lagerbereich zylindrische (bevorzugt aber im wesentlichen über die gesamte Länge zylindrisch ausgebildet), in einem Lager drehbar gelagerte Antriebswelle mittelbar mit dem Antrieb verbunden ist, wobei die Antriebswelle und der Mahlkegel einstückig ausgebildet sind.

Ganz besonders vorteilhaft erweist sich diese einstückige Konstruktion, wenn zudem die Antriebswelle über eine selbsteinrastende Rastverbindung mit einem Zahnrad verbunden ist, wobei dieses Zahnrad die Verbindung zum Antrieb sicherstellt. Dadurch wird die Montage wesentlich vereinfacht und zudem wird auch bei Langzeitgebrauch verhindert, dass zwischen Zahnrad und Mahlkegel ein Spiel entsteht.

Gemäss einer ersten bevorzugten Ausführungsform der Erfindung ist die Antriebswelle mit einem Aussengewinde oder wenigstens einer Gewinderille versehen, wobei dieses Aussengewinde respektive die wenigstens eine Gewinderille direkt in ein in der zylindrischen Innenfläche der Nabe eines Zahnrades vorgesehenes Innengewinde respektive Führungsrippe eingreift. Bevorzugtermassen verfügt die Antriebswelle über wenigstens eine, bevorzugt zwei (gewissermassen gegenüberliegende) Gewinderillen, und das Zahnrad verfügt seinerseits über wenigstens eine, bevorzugt zwei (gegenüberliegende) Führungsrippen. Diese Führungsrippen sind bevorzugtermassen nur über einen Winkelbereich von 5-30° ausgebildet.

Um die genannte Selbsteinrastung konstruktiv einfach zu realisieren, ist es möglich, gemäss einer weiteren bevorzugten Ausführungsform, das Aussengewinde respektive die Gewinderillen eine Auffangtasche aufweisen zu lassen, in welche die Verbindung zwischen Antriebswelle und Zahnrad selbsteinrastend beim erreichen des Anschlages einrastet.

Hinsichtlich der Vermeidung eines Spiels zwischen Zahnrad und Antriebswelle erweist es sich gemäss einer weiteren Ausführungsform als vorteilhaft, wenn zwischen einem bevorzugtermassen als Gleitlager ausgebildeten Lager und dem Zahnrad ein Federelement angeordnet ist, welches eine Rückstellkraft in axialer Richtung zur Unterstützung der Selbsteinrastung gewährleistet. Bevorzugtermassen handelt es sich bei diesem Federelement um eine Wellfeder. Denkbar ist auch eine Spiralfeder.

Konstruktiv besonders einfach lässt sich dieser Befestigungsmechanismus realisieren, wenn am Zahnrad die Führungsrippen direkt angeformt sind, beispielsweise in Form von zwei gegenüberliegenden linsenförmigen Führungsrippen respektive Führungsvorsprüngen. Beispielsweise können derartige Führungsrippen angespritzt sein, wenn, wie bevorzugt, wenigstens der Bereich der Nabe des Zahnrades aus einem (gegebenenfalls faserverstärkten) Kunststoff gefertigt ist.

Um sicherzustellen, dass bei einer vollständigen Blockierung im Mahlwerk der Motor nicht überbelastet wird, ist es zudem möglich, die Verbindung zwischen Zahnrad und Antriebswelle als Rutschkupplung auszubilden.

Wie bereits eingangs erläutert, besteht bevorzugtermassen der Mahlkegel und die daran angeordnete und mit diesem einstückig ausgebildete Antriebswelle und/oder der Mahlring aus Metall, insbesondere bevorzugt aus (gehärtetem) Stahl, aus einem mit einem gehärteten Material beschichteten Körper, oder aus Keramik.

Bevorzugtermassen sind im wesentlichen alle anderen Teile (abgesehen vom motorischen Antrieb) aus Kunststoff gefertigt. So beispielsweise das Lager (beispielsweise in Form einer Lagerbuchse) und/oder das Zahnrad, wobei Letzteres bevorzugtermassen wenigstens teilweise aus Kunststoff gefertigt ist. Möglich ist beispielsweise die Herstellung in einem Spritzgussverfahren.

Um eine u. a. geräuschmässig optimierte Ankopplung von Motor an das Mahlwerk zu gewährleisten und um weiterhin insbesondere beim anfahren und auch beim auftreffen auf Hindernisse im Mahlspalt eine ideale Betriebsweise gewährleisten zu können, erweist es sich als vorteilhaft, wenn der Motor in einer wenigstens teilweise elastischen Weise an das Mahlwerk angekoppelt ist, und beispielsweise das Zahnrad als Zwei-Komponentenbauteil aufgebaut ist, wobei wenigstens im Bereich der Nabe und im Bereich der Zahnung ein hartes, starres Kunststoffmaterial (beispielsweise Polyamid, Polyethylen, Polypropylen, Polycarbonat, Polyurethan, Polyoxymethylen/Polyacetal (POM), Polytetrafluorethylen (PTFE), Polyetheretherketon (PEEK), Polyetherimid (PEI). Bevorzugt wird dabei POM, wobei diese Kunststoffe auch faserverstärkt sein können oder als Mischungen ausgebildet sein können) angeordnet ist, und wobei im dazwischenliegenden Bereich (oder zwischen der Nabe und der Welle) ein elastisches Material (Kautschuk, Elastomere, Gummi) derart angeordnet ist, dass zwischen dem Bereich der Nabe und dem Bereich der Zahnung eine wenigstens teilweise elastische und nicht starre Kopplung besteht.

Bevorzugtermassen handelt es sich beim elastischen Material um ein Material mit einer Härte im Bereich von 35-99 Shore oder 20 - 95 Shore, bevorzugt 25-90 Shore, insbesondere bevorzugt 30-50 Shore (jeweils in der Folge Shore A, nach DIN 53505, sofern nicht anders angegeben).

Grundsätzlich kann es sich beim Zahnrad um eine nahezu beliebige Bauweise handeln, solange eine Ankopplung eines Antriebes möglich ist. So ist es möglich, dass es sich beim Zahnrad um einen Stirnzahnrad, um ein Schneckenzahnrad oder um ein Kegelzahnrad handelt.

Insbesondere im (halb-)automatisierten Betrieb erweist es sich als vorteilhaft, wenn der Antrieb als elektromotorischer Antrieb ausgestaltet ist (ein manueller Antrieb ist aber ebenfalls denkbar). Insbesondere bevorzugt ist dabei das Zahnrad über ein Antriebszahnrad angetrieben, welches direkt auf der Welle des Elektromotors angeordnet ist.

Weitere bevorzugte Ausführungsformen der Erfindung sind in den abhängigen Ansprüchen beschrieben.

Folgende Elemente sind zusammenfassend entweder in Kombination oder jeweils einzeln betrachtet für sich genommen erfindungsgemässe Konstruktionen, welche auch unabhängig von den oben genannten Merkmalen Neuheit und erfinderischen Charakter aufweisen:
- Verbindung von Mahlkegel und Abtriebswelle zu einer einstückigen Einheit verringert den Montageaufwand u. reduziert die Summentoleranzen.
- Verbindung von Abtriebswelle und -Zahnrad durch einen angespritzten EinrastVerschluss. Dabei wird das Antriebszahnrad über ein Federelement auf den Antriebsbolzen vorgespannt eingerastet.
- Geräuschdämpfung beim Abrollen des Antriebszahnrades auf dem Abtriebszahnrad durch einen 2-Komponenten-Aufbau des Abtriebzahnrades: Das Zahnrad wird durch eine Dämpfungsschicht aus Gummi unter dem Zahnkranz gegen Schwingungs- und Körperschallübertragungen gedämpft. Weiters verleiht dieser Aufbau eine Elastizität in radialer Richtung am Zahnkranz und dämpft dadurch die Krafteinleitung im Falle des Blockierens.
- Verstellrasterung über angespritzte Halbkugeln auf einem Filmscharnier des Grundgehäuses, welche im Verstellring einrasten (vergleiche die weiter unten im Detail diskutierte Rastnase 9 zusammen mit dem Verstellring 4 und den darin angeordneten Vertiefungen 31). Die Rasterung (Vertiefungen 31) am Verstellring ist ebenfalls mitgespritzt.
- Für eine weiter abgesicherte Variante ist der Einbau einer Rutschkuppelung direkt zwischen Abtriebswelle und Nabe des Abtriebszahnrades vorgesehen.
- Modulbauweise: Durch die Modulbauweise ist es möglich, den Antriebsmotor jeweils zum Beispiel um 90° Grad um die Längsachse zu versetzen, wodurch besser auf die Platzverhältnis in der jeweiligen Kaffeemaschine eingegangen werden kann. Die starke Reduktion der Anzahl der einzelnen Bauteile sowie die modulare Bauweise ist ein grosser Vorteil insbesondere bei derartigen Mahlwerken, welche in grössere Maschinen eingebaut werden sollen, da auf unterschiedlichste Platzverhältnisse angepasst werden kann.
- Verstellmechanismus: Der Verstellmechanismus des Mahlwerks ist durch Integration der Längsführungen (vergleiche die weiter unten diskutierten axialen Führungen 38) in den Mahlring bzw. in das Grundgehäuse (vergleiche das weiter unten diskutierte Führungselement 8) mit lediglich 2 Teilen machbar. Dies ist möglich durch die Integration von Funktionen des Verstellmechanismus' in den Mahlring.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: Eine perspektivische Ansicht einer Kaffeemühle gemäss einem ersten Ausführungsbeispiel;
- Fig. 2: Eine Ansicht auf die Kaffeemühle gemäss Figur 1 von oben;
- Fig. 3: Einen Schnitt durch die Kaffeemühle gemäss Figur 1 entlang der Schnittlinie A-A in Figur 2;
- Fig. 4: Eine Kaffeemühle gemäss einem weiteren Ausführungsbeispiel, wobei a) eine perspektivische Ansicht von schräg oben darstellt; b) eine perspektivische Ansicht von schräg unten darstellt; c) eine Ansicht von oben darstellt; d) einen axialen Schnitt entlang der Schnittlinie A-A in Figur 4c) darstellt; e) eine Explosionsdarstellung der einzelnen Elemente dieses Ausführungsbeispiels darstellt;
- Fig. 5: Verschiedene Ansichten des einstückig ausgebildeten Mahlkegels mit Antriebswelle, wobei a) eine perspektivische Ansicht darstellt; b) eine Ansicht von oben darstellt; c) eine Ansicht von der Seite darstellt;
- Fig. 6: Unterschiedliche Ansichten des Mahlringes darstellt, wobei in a) eine perspektivische Ansicht dargestellt ist, in b) eine Ansicht von der Seite; in c) ein axialer Schnitt dargestellt ist; in d) ein Detail gemäss Ausschnitt D in b) dargestellt ist;
- Fig. 7: Unterschiedliche Ansichten des Zahnrades, wobei in a) eine perspektivische Ansicht dargestellt ist, in b) eine Aufsicht dargestellt ist; und in c) ein axialer Schnitt entlang der Schnittlinie A-A in b) dargestellt ist;
- Fig.8: Unterschiedliche Ansichten des Führungselements, wobei in a) eine perspektivische Ansicht von schräg unten dargestellt ist, in b) eine perspektivische Ansicht von schräg oben dargestellt ist; in c) eine seitliche Ansicht dargestellt ist; in d) eine Aufsicht von oben dargestellt ist; in e) ein axialer Schnitt entlang der Schnittlinie A-A in d) dargestellt ist;
- Fig. 9: Unterschiedliche Ansichten des Verstellringes, wobei in a) eine perspektivische Ansicht von schräg unten dargestellt ist, in b) eine perspektivische Ansicht von schräg oben dargestellt ist; in c) eine seitliche Ansicht dargestellt ist; in d) ein axialer Schnitt entlang der Linie A-A in f) dargestellt ist; in e) eine Ansicht von unten dargestellt ist; in f) eine Ansicht von oben dargestellt ist; in g) der Schnitt entlang der Linie B-B in e) dargestellt ist, und in h) der Ausschnitt C aus Figur 9 g) dargestellt ist; und
- Fig. 10: Unterschiedliche Ansichten des Flügelrades, wobei in a) eine perspektivische Ansicht dargestellt ist, in b) ein axialer Schnitt entlang der Linie A-A in c) dargestellt ist und in c) eine Aufsicht dargestellt ist.

### WEGE ZUR AUSFÜHRUNG DER ERFINDUNG

In der Folge soll die Erfindung anhand von mehreren Beispielen erläutert werden. Die Erläuterung dieser Beispiele und deren Funktionsweise dient dabei zur Illustration der technischen Durchführbarkeit der Erfindung sowie unterschiedlicher Bauweisen. Die Ausführungsbeispiele sollen aber nicht zur Einschränkung des Schutzgegenstandes, wie er in den angehängten Patentansprüchen definiert ist, ausgelegt werden.

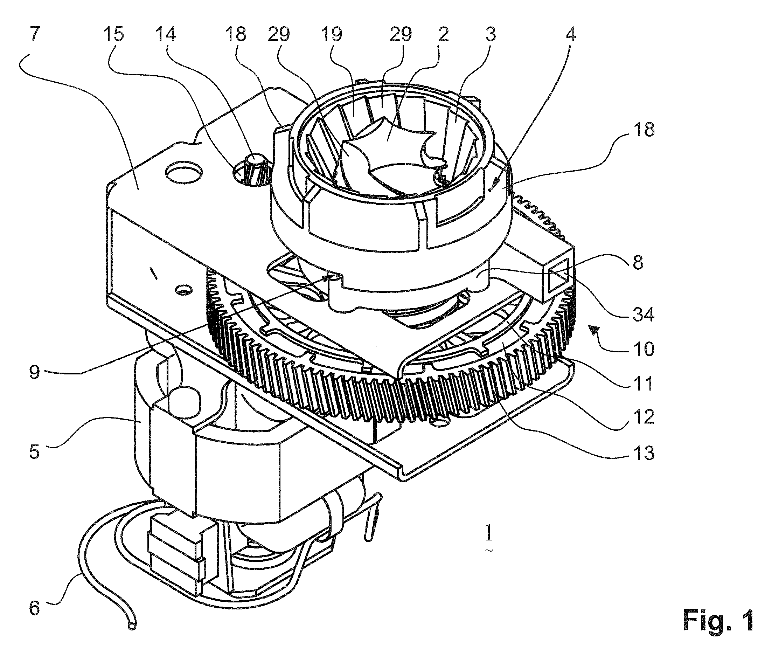

In Figur 1 ist eine perspektivische Ansicht eines erstes Ausführungsbeispieles einer Kaffeemühle nach der Erfindung dargestellt. Die Kaffeemühle 1 umfasst dabei einen Motor 5, welcher über ein Kabel 6, welches zur elektrischen Versorgung und/oder gegebenenfalls auch zur Steuerung des Motors verwendet werden kann, angesteuert/versorgt wird. Weiterhin ist ein Gehäuse 7 vorhanden, in respektive an welchem die wesentlichen funktionellen Elemente angeordnet sind. Die Kaffeemühle umfasst einen Mahlkegel 2, welcher innerhalb eines Mahlringes 3 angeordnet ist. In einem oberen Bereich, dem Füllbereich 19, sind die beiden Elemente 2 und 3 gegenläufig konisch unter Ausbildung eines grossen Spaltes ausgebildet. In diesem Füllspalt sind zudem sowohl am Mahlkegel wie auch am Mahlring Fördernuten 29 vorgesehen, welche das Mahlgut in den eigentlichen Mahlbereich führen sollen. Beim Mahlgut kann es sich um körniges Material aus dem Nahrungsmittelbereich handeln, insbesondere bevorzugt handelt es sich um Kaffeebohnen. Gleichermassen kann eine derartige Mühle aber auch zur Zerkleinerung von Pfeffer oder ähnlichem verwendet werden.

Der Mahlring 3 ist umgeben von einem Verstellring 4, welcher nach Aussen über Rippen 18 verfügt, über welche der Verstellring 4 gedreht werden kann und damit der Mahlspalt der Mühle eingestellt werden kann. Weiterhin ist ein Führungselement 8 für den Mahlring angeordnet. Das Führungselement 8 verfügt über eine an diesem elastisch angespritzten Rastnase 9, welche in eine Reihe 31 von Vertiefungen im Verstellring 4 eingreift und somit für die Rotation des Verstellringes 4 definierte Positionen vorgibt.

Am Führungselement 8 ist normalerweise auch eine Austrittsöffnung 34 für das gemahlene Mahlgut angeformt.

Unterhalb dieser Elemente ist ein Zahnrad 10 angeordnet. Dieses Zahnrad 10 ist in Wirkverbindung mit dem Mahlkegel und dient zum Antrieb desselben. Das Zahnrad 10 ist aus mehreren Komponenten aufgebaut, so aus einem inneren harten Bereich 11, einem äusseren harten Bereich 13, der Zahnung, und einem dazwischenliegenden elastischen Bereich 12. Dieser elastische Bereich ist aus Gummi mit einer Härte von 20-95 Shore A, bevorzugt 25-90 Shore A, insbesondere bevorzugt 30-50 Shore A, ausgebildet. Dieses Zahnrad, welches starr über die Antriebswelle 22 des Mahlkegels 2 mit dem Mahlkegel 2 verbunden ist, wird angetrieben von einem Antriebszahnrad 14, welches normalerweise direkt auf der Welle des Motors 5 angeordnet ist. Im vorliegenden Fall durchtritt die Spitze dieses Antriebszahnrades 14 das Gehäuse 7 in einer Öffnung 15.

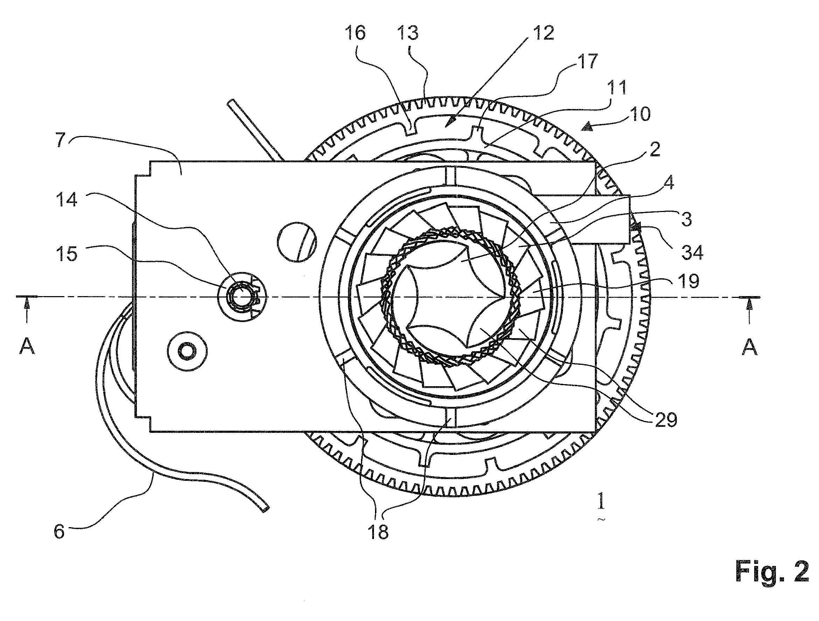

Figur 2 zeigt eine Ansicht von oben auf eine Kaffeemühle gemäss Figur 1. Hierbei kann unter anderem erkannt werden, dass der gummielastische Bereich 12 zwischen dem inneren harten Bereich 11 und dem äusseren harten Bereich, der Zahnung 13 des Zahnrades 10, derart angeordnet ist, dass eine bleibende relative Verschiebung der Elemente 11 und 13 verhindert wird. Zu diesem Zweck sind am inneren harten Bereich nach aussen gerichtete Vorsprünge oder Rippen oder Stege 17 angeordnet, welche in den elastischen Bereich 12 hineinragen. Gleichermassen sind gewissermassen entgegengesetzt am äusseren harten Bereich, der Zahnung 13, nach innen gerichtete Vorsprünge, Rippen oder Stege 16 angeordnet, welche ebenfalls in den Zwischenbereich 12 hineinragen. Die Vorsprünge 16 und 17 sind dabei bevorzugtermnassen symmetrisch versetzt in Rotationsrichtung angeordnet. Durch diese Verzahnung der Elemente 16 und 17 in den elastischen Bereich 12 wird sichergestellt, dass der Bereich 12 nur in elastischer Hinsicht wirkt und kein Rutschen zwischen den Elementen 11 und 13 möglich ist.

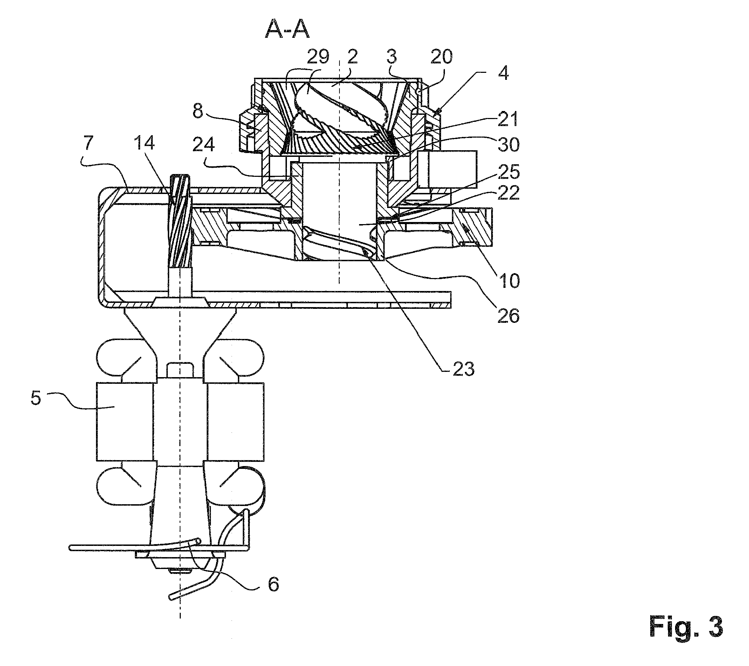

Wie aus der Schnittdarstellung gemäss Figur 3 erkannt werden kann, umfasst eine derartige Kaffeemühle im Vergleich zum Stand der Technik wesentlich weniger einzelne Elemente, was einer der grossen Vorteile der vorgeschlagenen Bauweise ist.

Der Verstellring 4 greift in einer drehbaren Führung 20 (frei drehbar) in den Mahlring 3 ein, und stellt somit sicher, dass die relative axiale Position der Elemente 3 und 4 fixiert ist, nicht aber deren relative Rotationsposition. Die Verbindung 20 ist bevorzugtermassen als Klick-Verbindung ausgestaltet. Im Beispiel gemäss Figur 3 ist sie so ausgestaltet, dass im Mahlring eine Nut vorhanden ist und im Verstellring eine entsprechende Rippe, selbstverständlich ist es aber auch möglich, am Mahlring eine Rippe vorzusehen und im Verstellring eine Nut.

Der Verstellring 4 sitzt aussen auf dem Führungselement 8 auf. Als eigentliches Lager für die Antriebswelle respektive Spindel 22 des Mahlkegels 2 ist eine Führungsbuchse 24 angeordnet, welche im Führungselement 8 fixiert ist.

Wie sich aus der eigentlichen Aufgabe der Kaffeemühle ergibt, ist der Mahlring 3 sowie der Mahlkegel 2 aus einem harten Material wie bspw. Stahl oder auch Keramik gefertigt, da anderenfalls diese Elemente durch den Mahlvorgang sukzessive zerstört würden. Wesentlich ist nun unter anderem, dass der eigentliche Mahlkegel 2 einstückig mit seiner Antriebswelle 22 ausgebildet ist. Mit anderen Worten ist die Antriebswelle 22 aus dem gleichen Material wie der Mahlkegel. Diese Antriebswelle 22 ist in einer Gleitführung in der Führungsbuchse 24 gelagert. Unterhalb der Führungsbuchse 24 ist das Zahnrad 10 angeordnet. Zwischen dem Zahnrad 10 und der Führungsbuchse 24 ist dabei ein Federelement 25 in Form einer Wellfeder angeordnet. Zudem verfügt die Antriebswelle 22 über Gewinderillen 23 und das Zahnrad seinerseits auf der innenliegenden Zylinderfläche der Nabe 26 über entsprechende Führungsrippen 28. Weiterhin enden die Gewinderillen 23 in der Antriebswelle 22 in sogenannten Auffangtaschen 36. Weiterhin muss herausgestrichen werden, dass die Drehrichtung der Mühle relativ zur Einschraubrichtung der Gewinderillen 23 in die Führungsrippe 28 derart ausgebildet ist, dass bei der im Betrieb normalerweise herrschenden Rotationsrichtung des Mahlkegels die Befestigung zwischen Zahnrad 10 und Antriebswelle 22 festgezogen wird.

Überhaupt ist die Befestigung des Mahlkegels mit der daran angeformten Antriebswelle 22 in dieser Konstruktion äusserst einfach. So kann nämlich der Mahlkegel 2 respektive seine Antriebswelle von oben in die Führungsbuchse 24 eingeschoben werden und von unten das Zahnrad 10 bei dazwischenliegendem Federelement 25 aufgesetzt und aufgedreht werden. Dabei schraubt sich die Gewinderille 23 sukzessive in die Führungsrippe 28 ein bis zum Erreichen der Auffangtasche 36 gegen die Federkraft der Feder 25, wobei beim Erreichen der Auffangtasche 36 die Befestigung zwischen Zahnrad 10 und Welle 22 automatisch verklickt.

Verstellring 4, Führungselement 8 sowie das weiterhin zwischen Mahlkegel und Führungsbuchse 24 angeordnete Flügelrad 30 und auch die harten Elemente des Zahnrades 10 sind aus Kunststoff gefertigt, typischerweise aus einem gespritzten Kunststoff. Insbesondere beim Zahnrad ist dabei bevorzugt, glasfaserverstärkten Kunststoff zu verwenden. Das Zahnrad 10 verfügt dabei über eine Konstruktion mit einer innenliegenden Nabe 26, davon abgehenden Speichen 27 und der bereits erläuterten inneren harten Konstruktion 11 (gewissermassen Felge), wobei die Elemente 26, 27 und 11 bevorzugtermassen einstückig ausgeformt sind.

Wie aus der Zusammenschau der Figuren 1 - 3 erkannt werden kann, ergibt sich somit aufgrund der einstückigen Ausbildung von Mahlkegel 2 und Antriebswelle 22 eine in Bezug auf die Herstellung aber auch in Bezug auf die Montage sehr einfache Bauweise, welche zu einer Reduktion der Anzahl der notwendigen Teile führt. Zudem ergibt sich durch den gummielastischen Bereich 12 eine teilweise Entkopplung des eigentlichen Mahlwerkes vom Motor. Es handelt sich dabei aufgrund des elastischen Bereiches 12 um eine gewissermassen elastische Entkopplung, was einerseits zu einer erhöhten Leichtgängigkeit beim Mahlvorgang führt, und andererseits eine erhebliche Geräuschdämpfung beim Mahlvorgang nach sich zieht.

Weiterhin ergibt sich aus der Zusammenschau der Figuren 1 - 3 (sowie auch aufgrund des anfolgend gezeigten Beispieles), dass das vorgeschlagene Mahlwerk stark modular aufgebaut ist und unterschiedlichen äusseren Rahmenbedingungen angepasst werden kann. So ist es bspw. möglich, den Motor auch von oben in das Gehäuse 7 zu führen, weiterhin ist es möglich, das Zahnrad 10 auch als Schneckenrad oder als Kegelzahnrad auszubilden und bspw. das Antriebszahnrad 14 tangential an das Zahnrad 10 anzukoppeln. Da derartige Mahlwerke bspw. in Kaffeemaschinen als individuelles Bauteil eingebaut werden, ist diese Flexibilität von enormem Vorteil, da sie ermöglicht, ein derartiges Mahlwerk bspw. den vorgegebenen Dimensionen in einer bereits gestalteten Kaffeemaschine anzupassen.

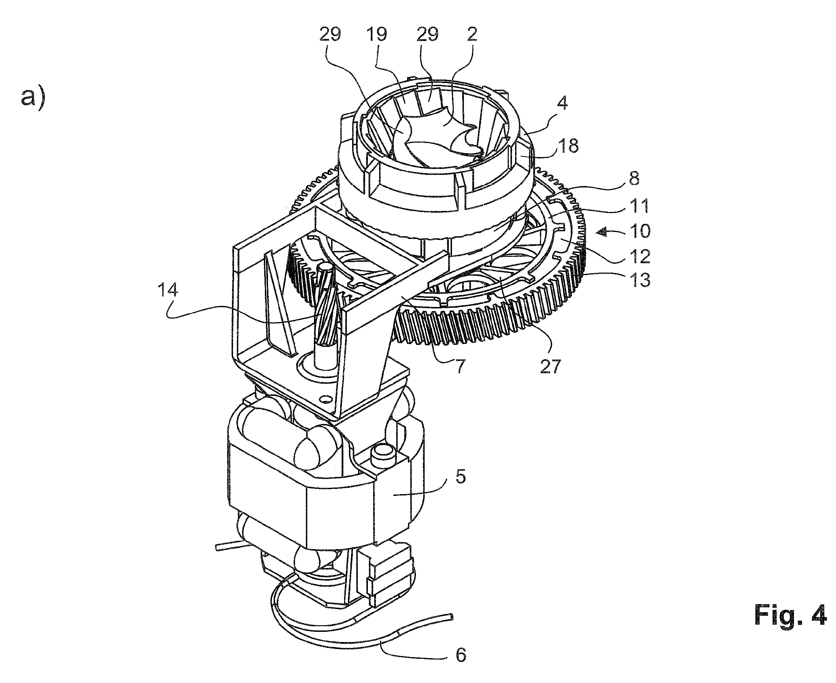

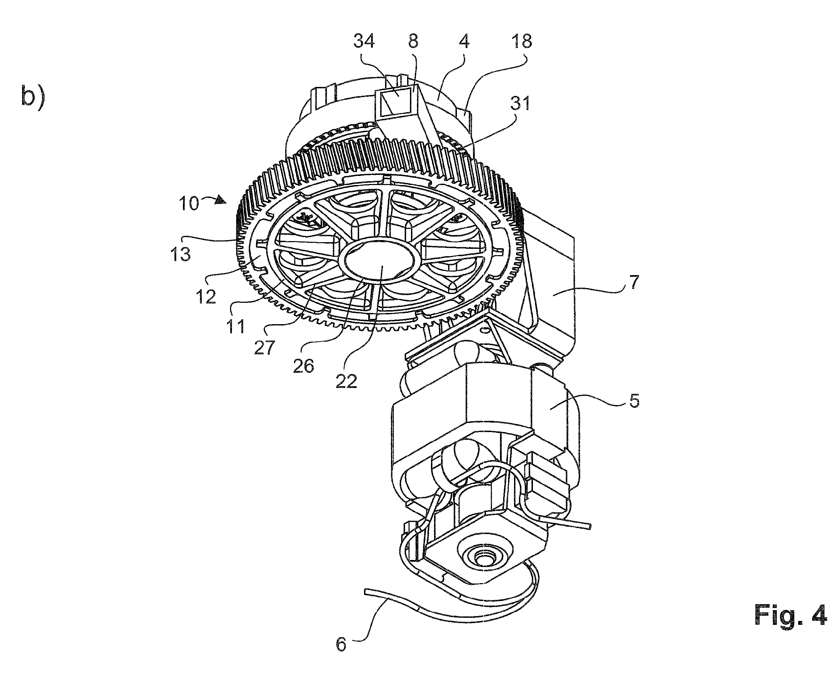

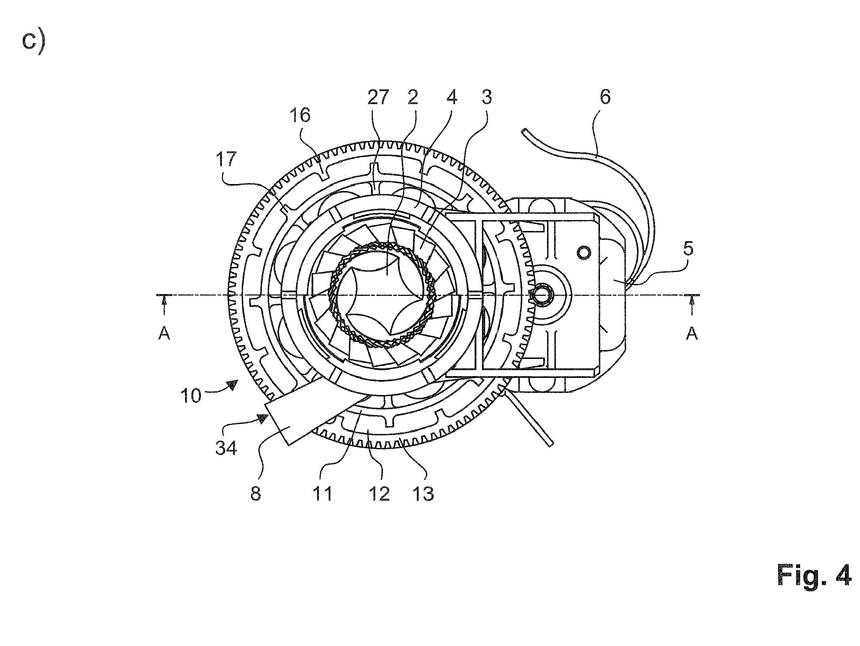

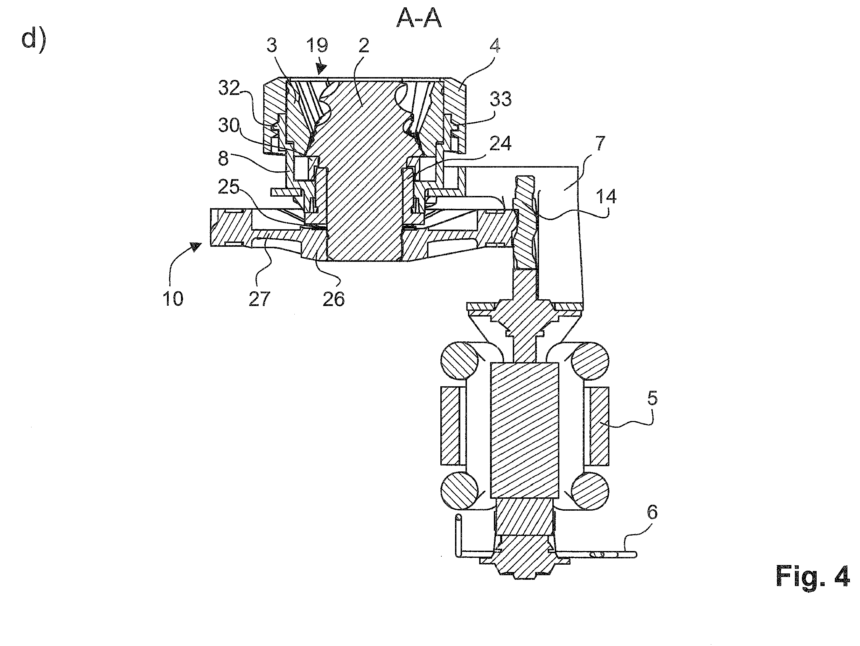

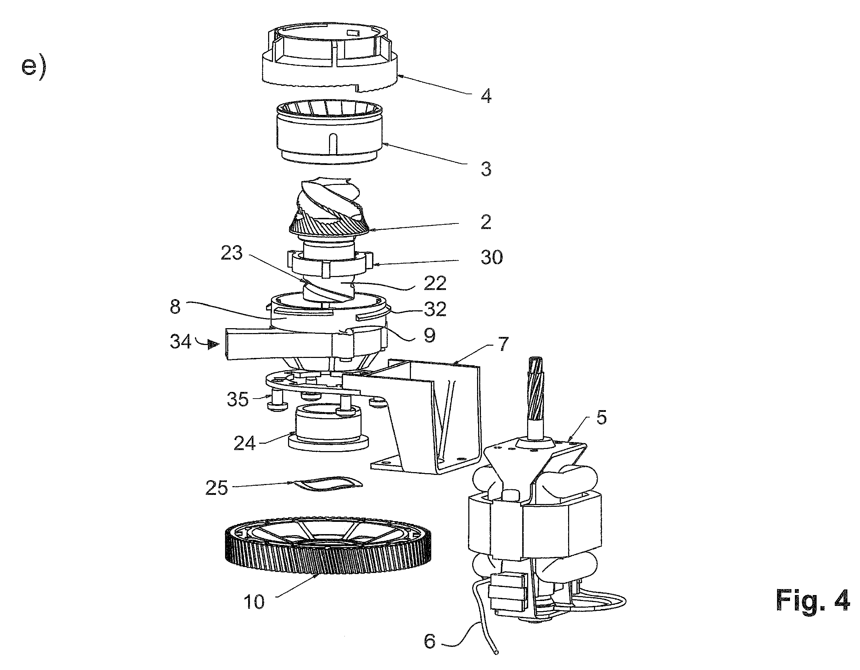

Die nun anfolgenden Figuren zeigen ein weiteres Ausführungsbeispiel einer Kaffeemühle nach der Erfindung. In Figur 4a) und b) sind perspektivische Ansichten dieses weiteren Ausführungsbeispieles dargestellt, wobei in a) eine Ansicht von schräg oben dargestellt ist und in b) eine Ansicht von schräg unten. Im Wesentlichen ist die Bauweise analog zur Bauweise gemäss den Figuren 1-3, das Gehäuseelement 7 ist hier aber im Wesentlichen nur als stark reduziertes Tragelement ausgebildet. Insbesondere aus Figur 4 kann dabei auch die sehr schlanke axiale Bauweise erkannt werden. Aus Figur 4c) kann erkannt werden, dass auch in radialer Ausdehnung das vorgeschlagene Mahlwerk über sehr geringe Dimensionen verfügt.

Unter anderem aus Figur 4d) kann gesehen werden, dass der Verstellring 4 mit Führungsnuten 33 resp. einem eigentlichen Führungsgewinde ausgestattet ist, welches mit aussenliegenden Führungsrippen 32 am Führungselement 8 kooperiert. Wird am Verstellring 4 gedreht, so verschiebt sich, aufgrund der freien Drehbarkeit zwischen Mahlring 3 und Verstellring 4 und aufgrund der weiterhin im Mahlring 3 vorgesehenen Führungsnuten 38 und der im Führungselement 8 angeordneten Führungsrippen 39 der Mahlring 3 aufgrund der Steigung des Gewindes 32/33 ausschliesslich in axialer Richtung, und so kann die Beabstandung des eigentlichen Mahlspaltes eingestellt werden. Dies ist die sogenannte Mahlgradverstellung (Einstellung der Feinheit des gemahlenen Gutes).

Aus Figur 4e) kann die dramatische Reduktion der Anzahl der Bauteile erkannt werden. Im Wesentlichen werden nur noch ca. 14 Bauteile benötigt, und es sind aufgrund der Vielzahl von verwendeten Klick-Mechanismen nur 4 Schrauben 35 erforderlich, was angesichts der hohen axialen Belastung beim Mahlvorgang sehr überraschend ist.

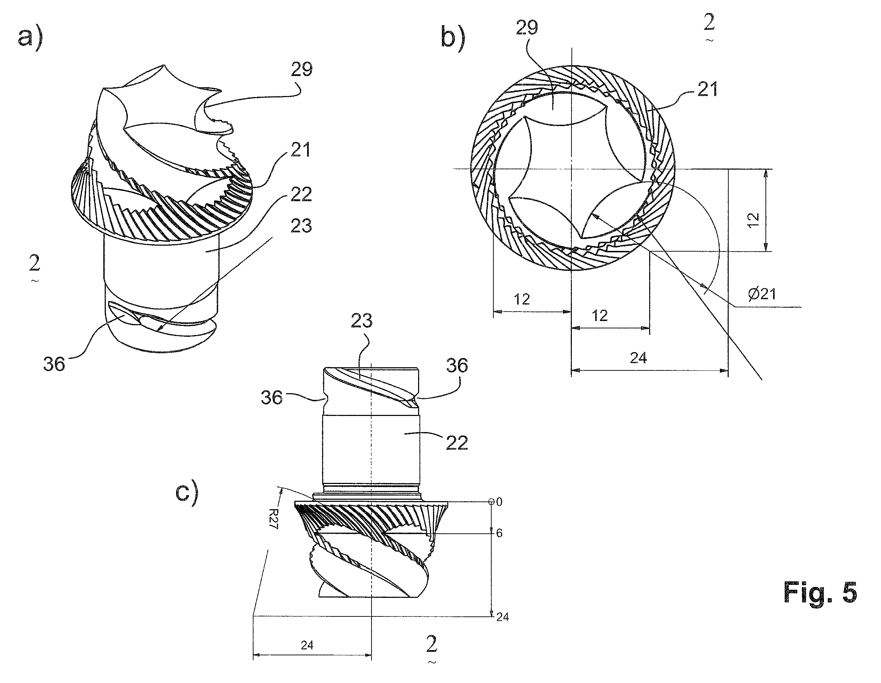

Figur 5 zeigt im Detail den Mahlkegel 2 mit der einstückig mit dem Mahlkegel ausgebildeten Antriebswelle 22. Insbesondere kann erkannt werden, dass die Gewinderillen 23 an ihrem Ende jeweils in einer Auffangtasche 36 enden. Durch die Kooperation mit den bereits erwähnten Führungsrippen 28 an der Nabe 26 des Zahnrades 10 kann so eine definitive Anschlags- und Einrastposition für die relative Fixierung von Mahlkegel resp. Antriebswelle 22 am Zahnrad 10 gewährleistet werden. Weiterhin können aus den Figuren 5b) und c) typische und mögliche Bemassungen eines derartigen Mahlkegels entnommen werden.

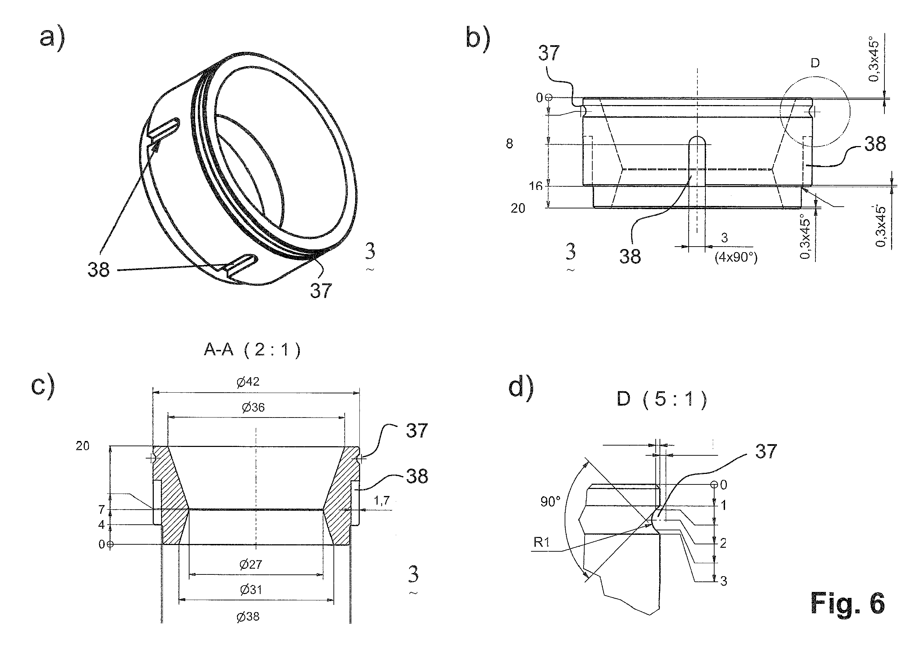

Figur 6 zeigt den Mahlring mit den bereits erläuterten axialen Führungsausnehmungen 38, welche sicherstellen, dass bei einem Drehen am Verstellring 4 der Mahlring ausschliesslich in axialer Richtung verschoben wird. Zudem kann erkannt werden, dass durch die umlaufende Nut 37 die freie Drehbarkeit von Verstellring 4 und Mahlring 3 gewährleistet werden kann. Aus den Figuren 6b) - d) können mögliche Bemassungen für einen derartigen Mahlring entnommen werden.

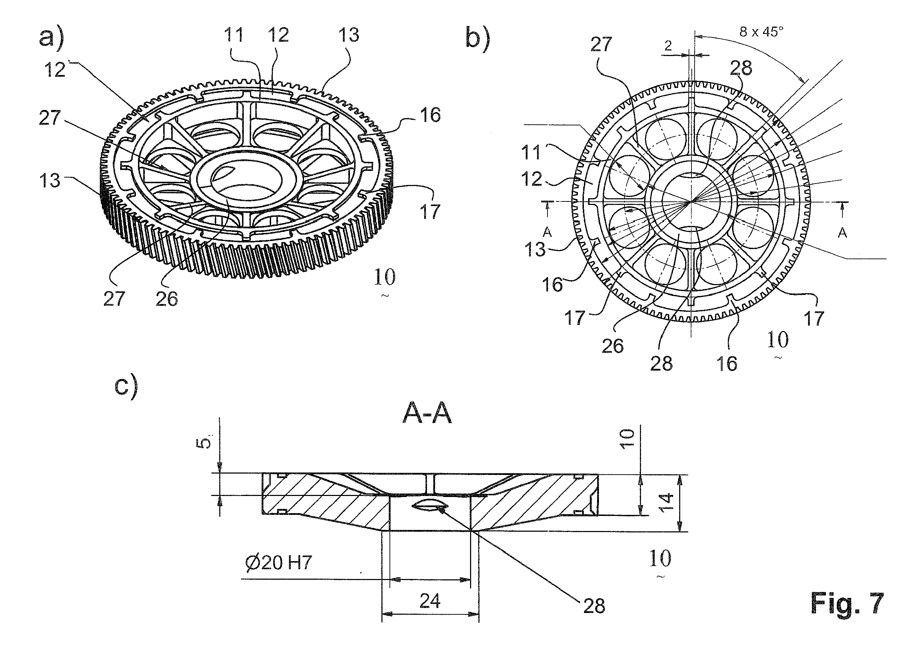

Figur 7 zeigt das Zahnrad 10 in unterschiedlichen Ansichten. Aus Figur 7a) kann die sehr leichte Bauweise gesehen werden, welche aufgrund der Verstrebungen trotzdem eine genügende Stabilität aufweist. Aus den Figuren 7b) und c) können mögliche Bemassungen (jeweils Millimeter) entnommen werden, wobei diese, wie auch die anderen im Rahmen dieser Offenbarung genannten Bemassungen, selbstverständlich nur beispielhaft zu verstehen sind und eine der möglichen Realisierungen darstellen. Andere Bemassungen sind je nach Belastungsverhältnissen und je nach Platzverhältnissen selbstverständlich möglich. Aus den Figuren 7a) - c) kann insbesondere erkannt werden, dass es sich bei der Führungsrippe 28 um eine gewissermassen linsenförmige nur einen Teil des radialen Umfangs überstreichenden Vorsprung handelt, welcher an zwei gegenüberliegenden Positionen angeordnet ist. Entsprechend verfügt auch die Antriebswelle 22 über zwei korrespondierende Gewinderillen 23, welche mit diesen Führungsrippen 28 kooperieren.

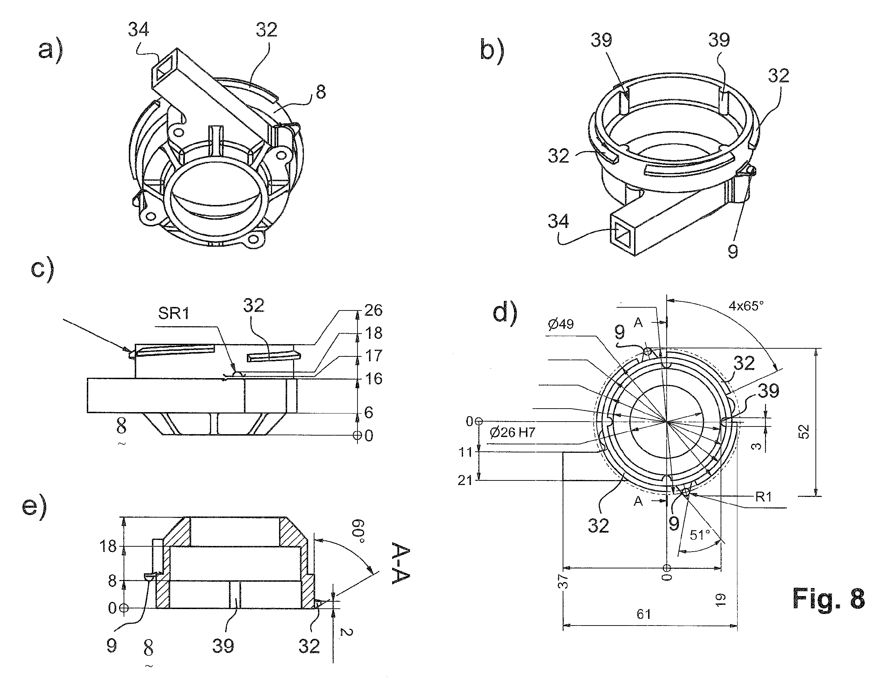

In Figur 8 sind unterschiedliche Ansichten des Führungselementes dargestellt. Insbesondere kann erkannt werden, dass das Führungselement 8 über aussenliegende Führungsrippen 32 verfügt mit einer gewissen Steigung. Weiterhin können die innenliegenden axialen Führungsrippen 39 für die korrespondierenden axialen Führungsausnehmungen 38 im Mahlring 3 erkannt werden.

Insbesondere herauszustreichen ist dabei vor allem auch die Rastnase 9, welche direkt am Führungselement 8 über eine Zunge derart angespritzt ist, dass die am Ende liegende Halbkugel elastisch gefedert ist und somit auf die separate Anordnung bspw. einer Spiralfeder vollständig verzichtet werden kann. Wie bereits erläutert, greift die Rastnase 9 in entsprechende Vertiefungen 31 im Verstellring 4 ein und legt so unterschiedliche Rotationsposition des Verstellrings eindeutig fest. Im vorliegenden Fall sind die Führungsrippen 32 nur segmentweise ausgebildet, es kann sich aber auch um einen durchlaufenden Zug handeln. Weiterhin sind im vorliegenden Fall vier axiale Führungsrippen 39 angeordnet, es ist aber selbstverständlich auch möglich, nur eine derartige Führungsrippe oder zwei, drei oder bspw. auch sechs derartige axiale Führungsrippen anzuordnen. Die Anordnung von vier derartigen Führungsrippen ist aber hinsichtlich der Verklemmung in vielen Situationen optimal.

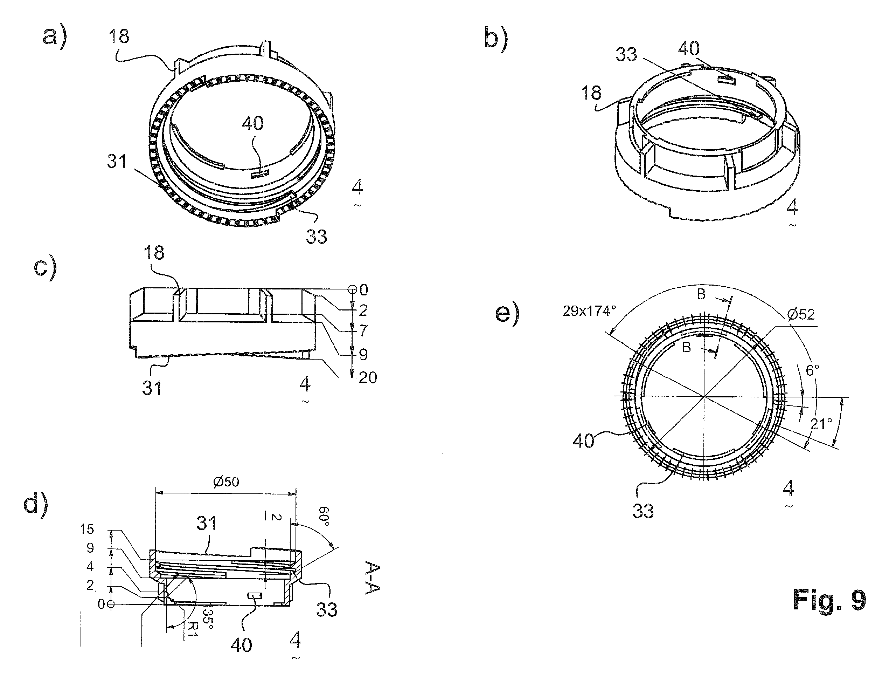

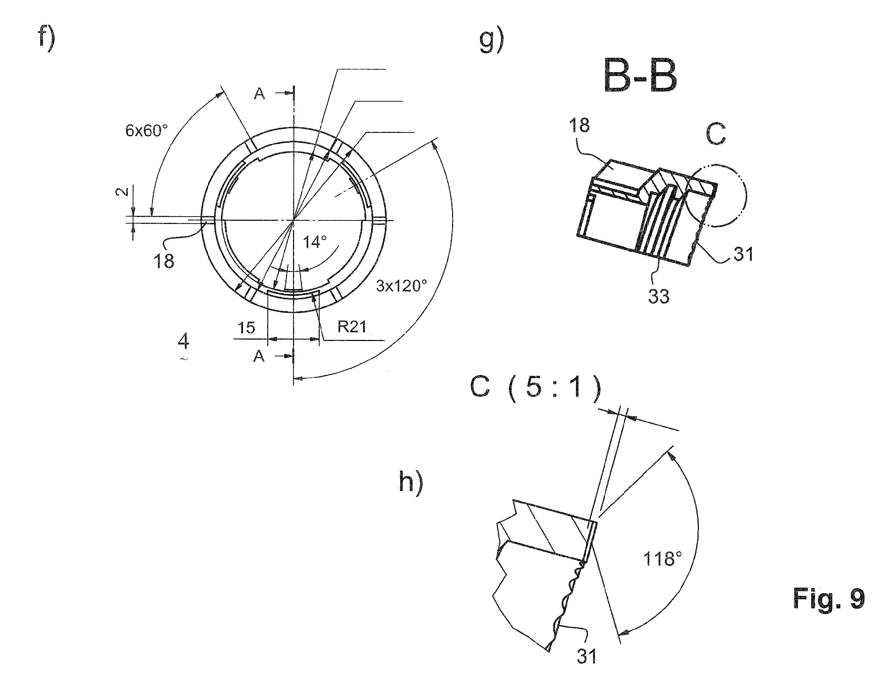

In Figur 9 sind unterschiedliche Ansichten des Verstellringes 4 zu erkennen. Insbesondere kann dabei die Reihe 31 von Vertiefungen an der Unterkante erkannt werden, in welche die Rastnase 9 bei den unterschiedlichen Rotationspositionen eingreift. Wie auch aus Figur 8d) erkannt werden kann, sind zwei derartige Rastnasen 9 gegenüberliegend angeordnet, und entsprechend verfügt der Verstellring 4 auch über zwei 180° Segmente von parallel zur Steigung der Führungsnut resp. des Führungsgewindes 33 verlaufenden Kulissen. Weiterhin kann bspw. aus Figur 9b) erkannt werden, dass die Führung in der umlaufenden Nut 37 idealerweise über eine Noppe 40 realisiert wird, welche es erlaubt, den Verstellring über einen Klick-Mechanismus auf den Mahlring 3 aufzuklicken. Zu diesem Zweck ist die Einrastnoppe 40 leicht beweglich angeformt bspw. wiederum über eine Zunge. Oder aber auch einfach durch die inhärente Deformationsfähigkeit des Materials, wie dies im vorliegenden Fall (vergleiche Figur 9d)) getan ist.

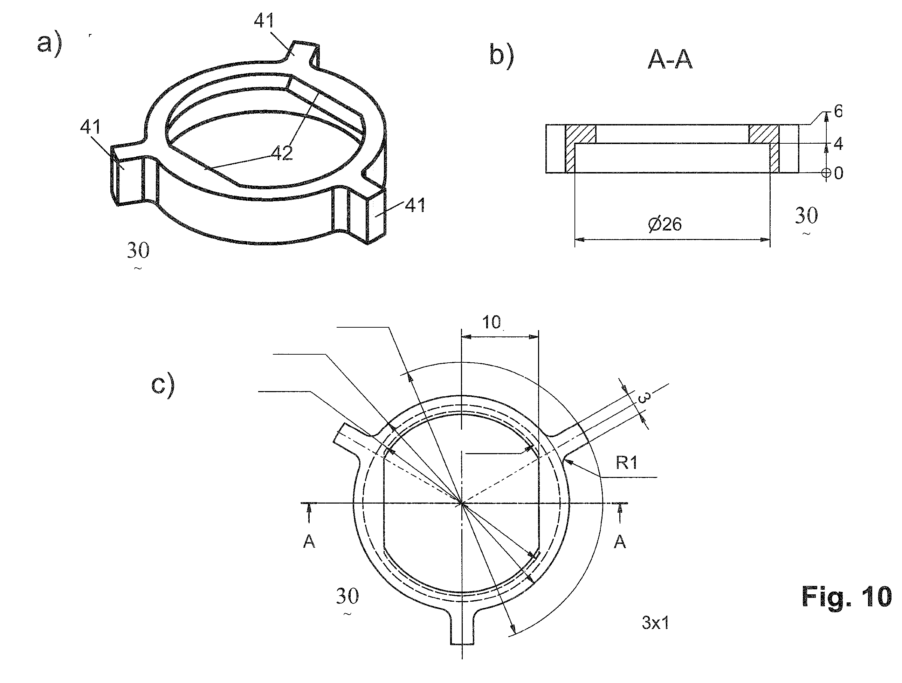

Figur 10 zeigt abschliessend unterschiedliche Ansichten des Flügelrades 30, welches zwischen der Unterseite des Mahlkegels und der entsprechenden Führung des Führungselementes 8 angeordnet ist. Das Flügelrad 30 wird bevorzugt von unten auf den Mahlkegel aufgeklipst. Das Flügelrad 30 verfügt auf der Aussenseite über Flügel 41, welche dazu dienen, das gemahlene Gut aus der Kammer unterhalb des Mahlwerkes durch die Öffnung 34 herauszutreiben. Dazu muss das Flügelrad 30 rotationsfest auf der Antriebswelle 22 aufsitzen, und entsprechend sind auf der Innenkontur des Flügelrades 30 Begrenzungen 42 vorgesehen, welche in korrespondierende lineare Rillen der Antriebswelle 22 direkt unterhalb des Kegels 2 eingreifen.

Als wesentliche Elemente können somit unter anderem einzelne oder auch Kombinationen der folgenden Elemente aufgefasst werden:
- Verstellring mit Wellenkontur für Verstellrasterung;
- Mahlring, der im Verstellring eingeklipst mit Nuten gegen das Verdrehen im Gehäuse gesichert;
- Mahlkegel mit einstückig dazu ausgebildeter integrierter Lagerwelle;
- Flügelrad ist auf den Mahlkegel resp. auf die Lagerwelle aufgeklipst;
- Lagerwelle des Mahlkegels verfügt über Einrastverschluss an das Zahnrad;
- das Führungselement verfügt über eine angespritzte Halbkugel für die Verstellrasterung;
- eine Wellfeder erlaubt eine spielfreie Befestigung der Lagerwelle des Mahlkegels am Zahnrad;
- das Zahnrad ist als Zweikomponentenspritzgussteil ausgebildet, wobei ein Zwischenbereich als Dämpfungsbereich aus einem elastischen Material gebildet ist.

### BEZUGSZEICHENLISTE

- 1: Kaffeemühle
- 2: Mahlkegel
- 3: Mahlring
- 4: Verstellring
- 5: Motor
- 6: Versorgung/Steuerung von 5
- 7: Gehäuse
- 8: Führungselement für Mahlring
- 9: Rastnase
- 10: Zahnrad
- 11: innerer harter Bereich von 10
- 12: elastischer Bereich von 10
- 13: Zahnung von 10
- 14: Antriebszahnrad
- 15: Öffnung in 7 für 14
- 16: Vorsprünge/Rippen an 13
- 17: Vorsprünge/Rippen an 11
- 18: Rippen an 4
- 19: Mahlspalt, Füllbereich von 1
- 20: drehbare Führung von 3 an 4 (Nut/Feder)
- 21: Mahlzähne an 2
- 22: Antriebswelle/Spindel von 2
- 23: Gewinderillen in 22
- 24: Führungsbuchse für 22
- 25: Federelement/Wellfeder
- 26: Nabe von 10
- 27: Speichen von 10
- 28: Führungsrippe an 26 für 23
- 29: Fördernuten
- 30: Flügelrad
- 31: Reihe von Vertiefungen in 4
- 32: Führungsrippe an 8 für 4
- 33: Führungsnut/Führungsgewinde in 4
- 34: Austrittsöffnung für Mahlgut
- 35: Schrauben
- 36: Auffangtasche
- 37: umlaufende Nut in 3 für umlaufende Rippe von 4
- 38: axiale Führungsausnehmungen in 3 für 8
- 39: axiale Führungsrippen an 8 für 38
- 40: Einrastnoppe für 4 (Feder)
- 41: Flügel
- 42: Begrenzer

## Patentansprüche

1. Mahlwerkzeug (1) zur Zerkleinerung von körnigem Material aus dem Lebensmittelbereich wie insbesondere bevorzugt Getreidekörner, Kaffeebohnen, Pfefferkörner, Salz oder Zucker, mit einem Mahlkegel (2) und einem diesen Mahlkegel (2) unter Bildung eines Mahlspaltes umgebenden feststehenden Mahlring (3), wobei der Mahlkegel (2) von einem Antrieb (5) angetrieben wird,
**dadurch gekennzeichnet, dass**
der Mahlkegel (2) über eine koaxiale, wenigstens im Lagerbereich zylindrische, in einem Lager (24) drehbar gelagerte Antriebswelle (22) mittelbar mit dem Antrieb (5) verbunden ist, wobei die Antriebswelle (22) und der Mahlkegel (2) einstückig ausgebildet sind.

2. Mahlwerkzeug (1) nach Anspruch 1, **dadurch gekennzeichnet, dass** die Antriebswelle (22) über eine selbsteinrastende Rastverbindung mit einem Zahnrad (10) verbunden ist.

3. Mahlwerkzeug (1) nach einem der vorhergehenden Ansprüche, **dadurch gekennzeichnet, dass** die Antriebswelle (22) mit einem Aussengewinde oder wenigstens einer Gewinderille (23) versehen ist, und dieses Aussengewinde respektive die wenigstens eine Gewinderille (23) direkt in ein in der zylindrischen Innenfläche der Nabe (26) eines Zahnrades (10) vorgesehenes Innengewinde respektive Führungsrippe (28) eingreift.

4. Mahlwerkzeug nach Anspruch 3, **dadurch gekennzeichnet, dass** die Antriebswelle (22) wenigstens eine, bevorzugt zwei Gewinderillen (23) aufweist, und dass das Zahnrad (10) wenigstens eine, bevorzugt zwei Führungsrippen (28), welche bevorzugtermassen nur über einen Winkelbereich von 5-30° ausgebildet sind, aufweist.

5. Mahlwerkzeug nach Anspruch 3 oder 4, **dadurch gekennzeichnet, dass** das Aussengewinde respektive die Gewinderillen (23) eine Auffangtasche (36) aufweisen, in welche die Verbindung zwischen Antriebswelle (22) und Zahnrad (10) selbsteinrastend beim erreichen des Anschlages einrastet.

6. Mahlwerkzeug nach einem der Ansprüche 2-5, **dadurch gekennzeichnet, dass** zwischen einem bevorzugtermassen als Gleitlager ausgebildeten Lager (24) und dem Zahnrad (10) ein Federelement (25) angeordnet ist, welches eine Rückstellkraft in axialer Richtung zur Unterstützung der Selbsteinrastung gewährleistet, wobei es sich bevorzugtermassen bei diesem Federelement (25) um eine Wellfeder handelt.

7. Mahlwerkzeug nach einem der Ansprüche 2-6, **dadurch gekennzeichnet, dass** am Zahnrad (10) Führungsrippen (28) bevorzugtermassen zwei gegenüberliegende linsen-förmige Führungsrippen (28) angespritzt sind.

8. Mahlwerkzeug nach einem der vorhergehenden Ansprüche, **dadurch gekennzeichnet, dass** die Verbindung zwischen Zahnrad (10) und Antriebswelle (22) als Rutschkupplung ausgebildet ist.

9. Mahlwerkzeug nach einem der vorhergehenden Ansprüche, **dadurch gekennzeichnet, dass** der Mahlkegel (2) und die daran angeordnete Antriebswelle (22) und/oder der Mahlring (3) aus Metall, insbesondere bevorzugt aus Stahl, aus einem mit einem gehärteten Material beschichteten Körper, oder aus Keramik gefertigt sind.

10. Mahlwerkzeug nach einem der vorhergehenden Ansprüche, **dadurch gekennzeichnet, dass** das Lager (24) und/oder das Zahnrad (10) wenigstens teilweise aus Kunststoff gefertigt sind, wie insbesondere bevorzugt hergestellt in einem Spritzgussverfahren.

11. Mahlwerkzeug nach einem der vorhergehenden Ansprüche, **dadurch gekennzeichnet, dass** das Zahnrad (10) als Zwei-Komponentenbauteil aufgebaut ist, wobei wenigstens im Bereich der Nabe (26) und im Bereich der Zahnung (13) ein hartes Kunststoffmaterial angeordnet ist, und wobei im dazwischenliegenden Bereich ein elastisches Material (12) der Art angeordnet ist, dass zwischen dem Bereich der Nabe (26) und dem Bereich der Zahnung (13) eine elastische Kopplung besteht.

12. Mahlwerkzeug nach Anspruch 11, **dadurch gekennzeichnet, dass** es sich beim elastischen Material (12) um ein Material mit einer Härte im Bereich von 20-95, bevorzugt 25-90 Shore A, insbesondere bevorzugt 30-50 Shore A handelt, insbesondere bevorzugt um Gummi mit einer derartigen Härte.

13. Mahlwerkzeug nach einem der vorhergehenden Ansprüche, **dadurch gekennzeichnet, dass** es sich beim Zahnrad (10) um ein Stirnzahnrad, um ein Schneckenzahnrad oder um ein Kegelzahnrad handelt.

14. Mahlwerkzeug nach einem der vorhergehenden Ansprüche, **dadurch gekennzeichnet, dass** es sich beim Antrieb (5) um einen manuellen Antrieb oder insbesondere bevorzugt um einen elektromotorischen Antrieb (5) handelt, wobei insbesondere bevorzugt das Zahnrad (10) angetrieben wird über ein Antriebszahnrad (14), welches direkt auf der Welle des Elektromotors (5) angeordnet ist.
